# EUROPEAN PATENT SPECIFICATION

(11) **EP 3 591 742 B1**
(45) Date of publication and mention of the grant of the patent: **16.04.2025**
(21) Application number: 17904750.1
(22) Date of filing: 29.12.2017
(51) Int. Cl.: H01M 4/485, H01M 4/04, H01M 4/1391, H01M 4/131

(54) **PRE-LITHIATION APPARATUS, METHOD FOR MANUFACTURING NEGATIVE ELECTRODE PART USING SAME, AND NEGATIVE ELECTRODE PART**
VORLITHIIERUNGSVORRICHTUNG, VERFAHREN ZUR HERSTELLUNG EINES NEGATIVELEKTRODENTEILS UNTER VERWENDUNG DAVON UND NEGATIVELEKTRODENTEIL
APPAREIL DE PRÉ-LITHIATION, PROCÉDÉ DE FABRICATION DE PARTIE D'ÉLECTRODE NÉGATIVE L'UTILISANT, ET PARTIE D'ÉLECTRODE NÉGATIVE

(30) Priority: 03.04.2017 KR 20170043030; 26.12.2017 KR 20170179905
(43) Date of publication of application: 08.01.2020
(73) Proprietor: LG Energy Solution, Ltd., Seoul 07335 (KR)
(72) Inventor: CHAE, Oh Byong, Daejeon 34125 (KR); KANG, Yoon Ah, Seoul 06990 (KR); SONG, Jun Hyuk, Daejeon 35241 (KR); KIM, Eun Kyung, Daejeon 34049 (KR); WOO, Sang Wook, Daejeon 35000 (KR)
(74) Representative: Hoffmann Eitle
(86) International application number: PCT/KR2017/015755
(87) International publication number: WO 2018/186561

(56) References cited:
- CN-U- 205 552 696
- JP-A- 2003 297 430
- JP-A- 2003 297 430
- JP-A- H06 124 709
- JP-A- H06 124 709
- JP-A- H06 150 935
- JP-A- H06 150 935
- JP-A- H1 186 847
- JP-A- H10 289 708
- US-A- 4 897 917
- US-A1- 2012 295 155
- HYE JIN KIM ET AL: "Controlled Prelithiation of Silicon Monoxide for High Performance Lithium-Ion Rechargeable Full Cells", NANO LETTERS, vol. 16, no. 1, 22 December 2015 (2015-12-22), US, pages 282 - 288, XP055558866, ISSN: 1530-6984, [retrieved on 20221005], DOI: 10.1021/acs.nanolett.5b03776
- LIU NIAN ET AL: "Prelithiated Silicon Nanowires as an Anode for Lithium Ion Batteries", ACS NANO, vol. 5, no. 8, 23 August 2011 (2011-08-23), US, pages 6487 - 6493, XP055835758, ISSN: 1936-0851, Retrieved from the Internet <URL:https://web.stanford.edu/group/cui_group/papers/112%20Nian%20prelithiation.PDF> [retrieved on 20221005], DOI: 10.1021/nn2017167

## Description

### TECHNICAL FIELD

The present invention relates to a pre-lithiation apparatus, a method of producing a negative electrode unit by using the same, and a negative electrode unit, and more particularly, to a pre-lithiation apparatus that is capable of improving production yield and quality of a negative electrode unit, a method of manufacturing a negative electrode unit by using the same, and a negative electrode unit.

### BACKGROUND ART

Recently, with the rapid spread of electronic apparatuses using batteries such as mobile phones, notebook computers, electric vehicles, and the like, demands for secondary batteries that are small and lightweight and have relatively high capacity have been rapidly increasing.

Generally, a secondary battery includes a positive electrode and a negative electrode, which are spaced apart from each other, and a separator disposed the positive electrode and the negative electrode and coated with an electrolyte. Such a secondary battery is a battery that produces electric energy through oxidation and reduction reactions when ions are intercalated into or deintercalated from a positive electrode and a negative electrode in a state in which an electrolyte is filled between the negative electrode and the positive electrode, each of which has an active material layer in which the ions are capable of being intercalated or deintercalated.

An electrode of a secondary battery, i.e., each of a positive electrode and a negative electrode includes a collector and an active material layer applied to the collector. In general, a lithium secondary battery includes a collector including a first collector made of aluminum, a positive electrode active material layer formed on the first collector and containing lithium such as LiCoO₂ and LiMn₂O₄, and a negative electrode made of copper, and an active material layer applied on the collector and made of a carbon-based material, e.g., graphite.

In the carbon-based negative active material layer, a solid electrolyte interface (SEI) layer is formed on a surface of the negative electrode active layer during an initial charging/discharging process (activation process). As a result, an initial irreversible phenomenon occurs, and also, the battery is reduced in capacity due to depletion of the electrolyte while the SEI layer is collapsed and regenerated during the continuous charging/discharging process.

To solve the capacity reduction problem associated with the carbon-based negative electrode active material layer, a technology in which a silicon oxide (SiO) material having an effective capacity of 10 times or more as compared with the carbon-based material is applied to the negative electrode active material layer has been developed in recent years due to an increase in demand for a high-capacity secondary battery. However, problems such as reduction in the total capacity of the battery and degradation in the cycle lifetime occur also as ever because of the large initial irreversible reaction.

To solve these problems, studies with respect to a method for attempting pre-lithiation on the negative electrode active material layer made of the silicon oxide-based material to change oxygen existing in the silicon oxide-based material into lithium oxide are being actively carried out. According to this method, the initial irreversible reaction of the silicon oxide-based material may be reduced to improve the lifetime.

In the method of performing the pre-lithiation on the negative electrode active material layer, a negative electrode is blanked or cut to have a predetermined length or a predetermined area, and a lithium-containing thin plate is disposed to face the negative electrode, and then, power is applied to dope lithium ions of the metal-containing thin plate into the negative electrode. The pre-lithiation method takes several days, e.g., ten days or more to uniformly dope the lithium ions over the negative electrode.

Also, as described above, since the large-area negative electrode is blanked or cut to form the plurality of negative electrodes, each of which has a predetermined area less than that of the large-area negative electrode, and the plurality of blanked (or cut) negative electrodes are individually immersed in a bath to perform the pre-lithiation, it takes a long time to perform the pre-lithiation on the plurality of electrodes and thereby to deteriorate a production rate.

(Patent Document 1) Korean Patent Publication No. 2006-0056969
JP H06 150 935 A describes the manufacture of a negative electrode collector. A metal lithium foil bonded to a resin film is cut into a fixed dimension by the blades of a die roll. The cut metal lithium foil is attached to the protruded portion of a transfer device by synchronizing the feed of the film with the rotation of the device. After the transfer of the foil, the movement of the foil stops momentarily until the next protrusion portion of the device coincides with the tip of the next cut lithium foil. At the point of coincidence, the foil is attached to the protrusion portion of the device, and this operation is continued. The transferred foil is again transferred into the hole of adhesive on which holes are provided with a fixed pattern on the upper surface of a negative electrode collector.

JP 2003-297430 A describes a method of manufacturing a secondary battery and a device for manufacturing a secondary battery electrode. The method of manufacturing a secondary battery accommodating positive and negative electrodes and an electrolyte in a case comprises steps of: providing a lithium mass between rolls for rolling the lithium mass to produce a lithium foil, superposing the lithium foil on the electrode and pressing the electrode and the lithium foil to integrate them; and cutting the continuous electrode by every predetermined length. Furthermore, at least two steps among electrode assembling steps are carried out, the electrode assembling comprising steps of: cutting the electrode by crossing a blade having a plane along a contour of the cut portion without the cutting line with the continuous electrode, the electrode cutting step being performed alternately with the cutting step; arranging the positive electrode and the negative electrode alternately; disposing a separator having a continuative elongated sheet shape along either side of either electrode and the other side of the other electrode; and superposing both electrodes via the separator.

### DISCLOSURE OF THE INVENTION

### TECHNICAL PROBLEM

The present invention provides a pre-lithiation apparatus that is capable of reducing a manufacturing time of a negative electrode unit, which includes a pre-lithiation process, and a method of producing a negative electrode unit by using the same.

The present invention provides a pre-lithiation apparatus that is capable of improving quality of a pre-lithiated negative electrode unit, a method of producing a negative electrode unit by using the same, and a negative electrode unit.

### TECHNICAL SOLUTION

The present invention provides a pre-lithiation apparatus as defined in claim 1. The pre-lithiation apparatus pre-lithiates a negative electrode structure having one surface on which a negative electrode is disposed to produce a negative electrode unit of a lithium secondary battery, wherein pre-lithiation is a reaction or action in which a negative electrode active material forming the negative electrode, which is made of a material comprising silicon oxide (SiO), is reduced to form lithium oxide, the pre-lithiation apparatus including: a first roll rotatable to wind or unwind the negative electrode structure therearound or therefrom before the pre-lithiation is performed; a second roll installed to be spaced apart from the first roll and rotatable to wind and collect the negative electrode structure, on which the pre-lithiation is performed, therearound; and a lithium roll extending in a direction in which the negative electrode structure is transferred from the first roll to the second roll and disposed between the first roll and the second roll to come into contact with at least one of one surface and a back surface of the negative electrode structure while being transferred from the first roll to the second roll so that lithium ions are provided to the negative electrode, wherein the lithium roll includes: a lithium foil on which a lithium film for pre-lithiating the negative electrode is formed on an outer circumferential surface thereof, and an elastic member having elasticity inside the lithium foil.

The lithium roll further includes a rotation body that is rotatable as the negative electrode structure is transferred, the elastic member is installed to surround an outer circumferential surface of the rotation body, and the lithium foil is installed (disposed) to surround an outer circumferential surface of the elastic member and provides lithium ions.

Still further, the lithium foil has a structure in which the lithium film is formed on one surface of a support, and the lithium foil is mounted on the elastic member so that the lithium film is exposed to the outside. The support extends along the outer circumferential surface of the elastic member to surround the outer circumferential surface of the elastic member, and a plurality of lithium films are discontinuously disposed on one surface of the support to constitute a pattern. Each of the plurality of lithium films has a surface area less than that of the negative electrode unit to be produced, and a plurality of discontinuous lithium films is disposed on an individual area corresponding to the negative electrode unit on the support.

The elastic member may include a silicone pad.

Each of the plurality of discontinuous lithium films may have a surface area of 400 *µ*m² or less.

The present invention provides a method of producing a negative electrode unit of a secondary battery as defined in claim 4. The method includes: a negative electrode structure transfer process of transferring a negative electrode structure, in which a negative electrode is formed, in one direction so that an electrolyte is provided on a collector formed to extend in one direction, wherein the negative electrode structure has a configuration in which the negative electrode containing the electrolyte is formed on the collector, wherein the electrolyte including lithium ions (Li+) is impregnated or provided in a negative electrode active material forming the negative electrode; a negative electrode pre-lithiation process of allowing at least one surface of the negative electrode to come into contact with a lithium film formed on an outer circumferential surface of a lithium roll while transferring the negative electrode structure to pre-lithiate the negative electrode of the negative electrode structure, wherein pre-lithiation is a reaction or action in which the negative electrode active material forming the negative electrode is reduced to form lithium oxide; and a negative electrode unit formation process of cutting the negative electrode structure on which the pre-lithiation of the negative electrode is performed to produce a plurality of negative electrode units, wherein, in the pre-lithiation process, an elastic member disposed inside the lithium roll is pressed in a direction of a rotation axis of the lithium roll according to a thickness of one surface of the negative electrode coming into contact with the lithium film surrounding an outer circumferential surface of the elastic member to minimize a gap between the at least one surface of the negative electrode and the lithium film.

The negative electrode of the negative electrode structure is made of a material comprising silicon oxide (SiO). In the negative electrode pre-lithiation process, a pre-lithiated area that is patterned so that pre-lithiated areas and non-pre-lithiated areas are alternately repeated is formed on the one surface of the negative electrode. The formation of the patterned pre-lithiated area is performed so that the negative electrode structure transferred in the one direction comes into contact with the lithium roll on which a plurality of lithium films that are discontinuously patterned on an outer circumferential surface of the negative electrode structure are formed to form a plurality of discontinuous pre-lithiated areas. Each of the plurality of lithium films has a surface area less than that of the negative electrode unit to be produced, and in the negative electrode structure, a pattern of the pre-lithiated areas is formed so that pre-lithiated areas and non-pre-lithiated areas are alternately repeated several times within an individual area corresponding to the negative electrode unit to be produced.

Each of the plurality of lithiated regions may have a surface area of 400 *µ*m² or less.

The present invention provides a negative electrode unit of a secondary battery as defined in claim 6, which is produced by the above method. The negative electrode unit includes: a collector having a predetermined area; and a negative electrode coated with silicon oxide on at least one surface of the collector and including an electrolyte, wherein one surface of the negative electrode is discontinuously pre-lithiated so that lithiated areas and non-pre-lithiated areas of the negative electrode are alternately repeated several times.

In the alternately repeated shape of a plurality of times of the lithiated areas and non-pre-lithiated areas, each of the lithiated areas may have a surface area of 400 *µ*m² or less.

### ADVANTAGEOUS EFFECTS

The pre-lithiation apparatus according to the embodiment of the present invention may be used to reduce the process time for pre-lithiating the negative electrode when compared with the related art, and thus, to improve the production rate.

Also, the lithium roll includes the elastic member to uniformly perform the pre-lithiation without the gap.

Also, the negative electrode structure may be pre-lithiated in the patterning manner to reduce the amount of lithium consumed in the lithium roll by reducing the pre-lithiation of the area except for the area used as the negative electrode unit of the battery.

Also, the negative electrode structure may be pre-lithiated in the pattering manner to perform the discontinuous pre-lithiation, thereby preventing the electrode from being expanded in volume due to the excessive pre-lithiation at the specific position according to the thickness of the electrode during the pre-lithiation.

### BRIEF DESCRIPTION OF THE DRAWINGS

FIG. 1 is a schematic conceptual view of a secondary battery according to an illustrative example, not forming part of the claimed invention, which includes a negative electrode that is pre-lithiated through a method according to the illustrative example.
FIG. 2 is a schematic conceptual view of a secondary battery including a negative electrode that is pre-lithiated through a method according to an embodiment of the present invention.
FIG. 3 is a conceptual view of a pre-lithiation apparatus including a lithium roll according to the illustrative example.
FIG. 4 is a schematic solid view of the lithium roll according to the illustrative example.
FIG. 5 is a view of a negative electrode structure that is pre-lithiated through the lithium roll according to the illustrative example.
FIG. 6A is a schematic view illustrating a lithium roll which does not include an elastic member and a state during pre-lithiation using the same.
FIG. 6B is a schematic view illustrating a lithium roll including the elastic member and a state during pre-lithiation using the same.
FIG. 7 is a view of a negative electrode structure that is pre-lithiated through a pre-lithiation apparatus according to a modified example of the illustrative example.
FIG. 8 is a conceptual view of the pre-lithiation apparatus according to the modified example of the illustrative example.
FIG. 9 is a conceptual view of a pre-lithiation apparatus including a lithium roll according to an embodiment of the present invention.
FIG. 10 is a schematic solid view of the lithium roll according to the embodiment of the present invention.
FIG. 11 is a view of a negative electrode structure that is pre-lithiated through the lithium roll, not forming part of the claimed invention.
FIG. 12 is a conceptual top view illustrating a state before a lithium foil is installed on an electric member according to the embodiment of the present invention.
FIG. 13 is a conceptual view of a pre-lithiation apparatus including a lithium roll according to a modified example of the embodiment.
FIG. 14 is a schematic solid view of the lithium roll according to the modified example of the embodiment.
FIG. 15 is a view of a negative electrode structure that is pre-lithiated through the lithium roll according to the modified example of the embodiment.
FIG. 16 is a conceptual top view illustrating a state before a lithium foil is installed on an electric member according to the modified example of the embodiment.

### MODE FOR CARRYING OUT THE INVENTION

Hereinafter, an illustrative example, not forming part of the claimed invention, and an embodiment of the present invention will be described in detail with reference to the accompanying drawings. The present invention may, however, be embodied in different forms and should not be construed as limited to the embodiment set forth herein. Rather, the illustrative example and the embodiment are provided so that the present invention will be thorough and complete, and will fully convey the scope of the present invention to those skilled in the art. In the figures, like reference numerals refer to like elements throughout.

The present invention relates to a pre-lithiation apparatus that is capable of reducing a decrease in battery capacity or improving the capacity, a method of producing a negative electrode unit by using the same, and a negative electrode unit. Also, the present invention relates to a pre-lithiation apparatus that is capable of pre-lithiating a negative electrode to improve capacity and thereby increasing a production time of the negative electrode and improving production yield, a method of producing a negative electrode unit by using the same, and a negative electrode unit.

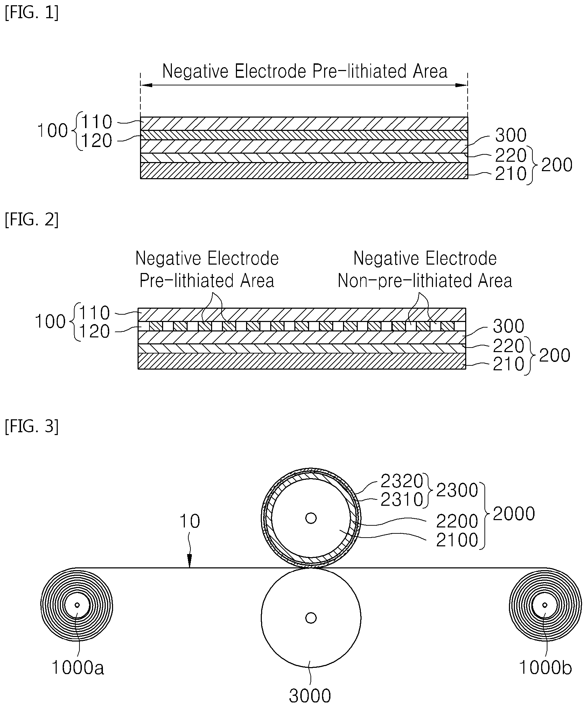

FIG. 1 is a schematic conceptual view of a secondary battery including a negative electrode that is pre-lithiated through a method according to the illustrative example. FIG. 2 is a schematic conceptual view of a secondary battery including a negative electrode that is pre-lithiated through a method according to the embodiment of the present invention. More particularly, FIG. 2 is a schematic conceptual view of a secondary battery including a negative electrode that is pre-lithiated through a method according to a modified example of the embodiment.

First, referring to FIGS. 1 and 2, a secondary battery including a pre-lithiated negative electrode will be described. Hereinafter, in accordance with the claimed invention, a lithium secondary battery will be described as an example of a secondary battery to be described in the embodiment.

A secondary battery, i.e., a lithium secondary battery includes first and second collectors 110 and 210 facing each other and spaced apart from each other, a positive electrode 220 and a negative electrode 120, which face each other and are spaced apart from each other between the first collector 210 and the second collector 110, and a separator 300 disposed between the positive electrode 220 and the negative electrode 120.

The first collector 210 has a predetermined area and thickness and is made of a metal thin plate, e.g., an Al thin plate, which has conductivity without causing a chemical change in the corresponding battery. The first collector 210 may be formed by depositing an Al thin film on one surface of a conductive support through a method such as sputtering or formed through electroplating or electroless plating. The first collector 210 may be formed of various materials in addition to the Al thin plate, for example, at least one of Ni, C, Cu, STS (stainless steel), Ti, Cr, Mn, Fe, Co, Zn, Mo, W, Ag, and Au. Also, the first collector 210 according an embodiment may have a thickness of 3 *µ*m to 500 *µ*m, but is not limited thereto. For example, a thin plate having various thicknesses according to specification of the secondary battery to be manufactured may be used as the first collector 210. Also, the first collector 210 has an uneven surface to improve bonding strength with a positive electrode active material layer and be manufactured in various forms such as a film, a sheet, foil, a net porous body, a foam body, and a non-woven fabric.

The positive electrode 200 may be applied to or formed on one surface of the first collector 210 facing the separator 300, be a layer including a positive electrode active material that is capable of reversibly intercalating or deintercalating lithium ions, and be called a positive electrode active material layer. The positive active material used as the positive electrode 220 may be formed of at least one of LiCoO₂, LiNiO₂, LiNiCoO₂, LiMn₂O₄, LiFeO₂, V₂O₅, V₆O₁₃, TiS, and MoS. The positive electrode 220 formed as the positive electrode active material layer may be formed by applying the positive electrode active material on one surface of the first collector 210 facing the separator 300, for example, may have a thickness of 50 *µ*m to 100 *µ*m. The thickness of the positive electrode 220 is not limited to the range of 50 *µ*m to 100 *µ*m, and thus may have various thicknesses according to specifications of the secondary battery to be manufactured.

The separator 300 is disposed between the positive electrode 220 and the negative electrode 120. In the secondary battery, the positive electrode and the negative electrode 120 are prevented from physically coming into contact with each other to prevent sudden discharge from occurring due to electrical short or prevent the secondary battery from being fired or exploded due to heat generated by the electrical short. It is preferable that an insulative thin film having high ion permeability and mechanical strength is used as the separator 300. For example, a sheet or non-woven fabric formed of an olefin-based polymer such as polypropylene, a glass fiber, or polyethylene, which has chemical resistance and hydrophobicity, may be used as the separator. Also, the separator 300 may generally have a thickness of 5 *µ*m to 300 *µ*m.

An electrolyte may be provided or impregnated in at least one of inner or outer portions of the separator 300. An inorganic solid electrolyte, an organic solid electrolyte, a non-aqueous organic solvent, or the like may be used as the electrolyte. When a solid electrolyte such as a polymer is used as the electrolyte, the solid electrolyte may also function as the separator.

For example, the inorganic solid electrolyte may include a Li-based nitride such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂, a halide, or a sulfate.

For example, the organic solid electrolyte may include a copolymer including a polyethylene derivative, a polyethylene oxide derivative, a polypropylene oxide derivative, a phosphoric acid ester polymer, poly agitation lysine, polyester sulfide, polyvinyl alcohol, poly vinylidene fluoride, or an ionic disintegrator.

For example, the non-aqueous organic solve may include an aprotic organic solvent such as N-methyl-2-pyrrolidone, propylene carbonate, ethylene carbonate, butylene carbonate, dimethyl carbonate, diethyle carbonate, gamma-butyrolacton, 1,2-dimethoxy ethane, tetrahydroxy franc, 2-methyl tetrahydrofuran, dimethyl sulfoxide, 1,3-dioxolane, formamide, dimethyl formamide, dioxolane, acetonitrile, nitromethane, methyl formate, methyl acetate, phosphoric acid tri-ester, trimethoxy methane, dioxolane derivatives, sulfolan, methyl sulfolan, 1,3-dimethyl-2-imidazolidinone, a propylene carbonate derivative, a tetrahydrofuran derivative, ether, methyl propionate, and ethyl propionate.

The second collector 110 may have a predetermined area and size, i.e., have a predetermined thickness to provide a flexible property and be made of a metal thin plate or a Cu thin plate, which has conductivity without causing a chemical change in the corresponding battery. The second collector 110 may be formed by depositing a Cu thin film on one surface of a conductive support through a method such as sputtering or formed through electroplating or electroless plating. The second collector 110 may be formed of various materials in addition to the Al thin plate, for example, at least one of STS (stainless steel), Al, Ni, Ti, C, Cr, Mn, Fe, Co, Zn, Mo, W, Ag, and Au. Also, the second collector 110 according an embodiment may have a thickness of 3 *µ*m to 500 *µ*m, but is not limited thereto. For example, a thin plate having various thicknesses according to specification of the secondary battery to be manufactured may be used as the first collector.

As described above, the second collector 110 may have a predetermined thickness to provide a flexible property, for example, the metal thin plate may have a film, a sheet, or a foil shape. Also, the second collector 110 may have flexibility and may be applied in various forms such as a net porous body, a foam body, and a non-woven fabric.

The negative electrode 120 may be applied to or formed on one surface of the second collector 110 facing the separator 300 and be a layer including a negative electrode active material that is capable of reversibly intercalating or deintercalating lithium ions while maintaining structural and electrical properties. Although a carbon-based material is used in the related art, according to the present invention, a silicon oxide (SiO) material having an effective capacity greater ten times or more than that of the carbon-based material is applied to the negative electrode active material layer, i.e., the negative electrode 120 to improve the capacity of the battery. The negative electrode 120 is formed by applying the negative electrode active material on one surface of the second collector 110 facing the separator 300, for example, may have a thickness of 50 *µ*m to 100 *µ*m. The thickness of the negative electrode is not limited to the range of 50 *µ*m to 100 *µ*m, and thus may have various thicknesses according to specifications of the secondary battery to be manufactured.

Also, an electrolyte including lithium ions (Li+) is impregnated or provided in the negative electrode 120, i.e., the negative electrode active material layer. For this, in an embodiment, the second collector 110 including the negative electrode 120 may be immersed or dipped into a bath containing electrolyte salts including lithium ion (Li⁺). Here, the electrolyte salts may include at least one of LiPF₆, LiBF₄, LiSbF₆, LiAsF₅, LiClO₄, LiN, LiN(SO₂CF₃)₂, LiN(SO₂C₂F₅)₂, LiC(SO₂CF₃)₂, LiPF₄(CF₃)₂, LiPF₃(C₂F₅)₃, LiPF₃(CF₃)₃.

As described above, a laminated structure of the second collector 110 and the negative electrode 120 may have a thickness of several *µ*m to several hundreds *µ*m and have a flexible property.

The negative electrode 120 according to the present invention is formed by applying the negative electrode active material layer made of the silicon oxide (SiO) material. After the negative electrode 120 contains the electrolyte, the negative electrode 120 is pre-lithiated through a below-described method according to an embodiment. Here, the pre-lithiation means reaction or action in which the negative electrode active material forming the negative electrode 120, i.e., silicon oxide (SiO) is reduced to form lithium oxide. Here, a voltage of a unit providing lithium ions from the outside is 0 V, and the negative electrode 120 itself has a predetermined voltage, for example, 3 V. Thus, the lithium ions supplied from the outside by a potential difference thereof are injected through the electrolyte of the negative electrode 120, and silicon oxide (SiO) that is the negative electrode active material reacts with the lithium ions to perform the reduction reaction, thereby forming the lithium oxide.

Since the negative electrode 120 or the negative electrode active material layer is pre-lithiated to previously perform a film formation reaction occurring during initial charging, a high-capacity secondary battery may be manufactured without reducing the capacity, and consumption of the lithium ions, which occurs as the number of cycles increase, may be compensated to improve lifetime.

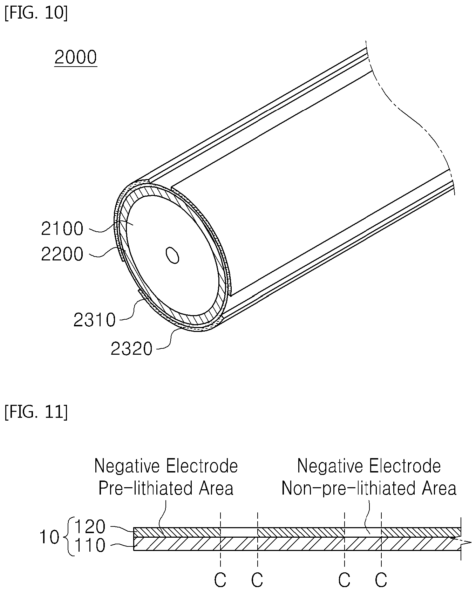

Generally, the pre-lithiation of the negative electrode 120 may be performed on an entire surface of the negative electrode as described in the illustrative example of FIG. 1. In accordance with the claimed invention, however, as described in the embodiment of FIG. 2 and FIG. 11 that will be described below, the negative electrode 120 is divided into a plurality of areas, and then a portion of the plurality of areas is pre-lithiated, and the remaining portion of the plurality of areas is not pre-lithiated (hereinafter, referred to as a non-pre-lithiation) so that the plurality of pre-lithiated areas are spaced apart from each other. In other words, the negative electrode 120 includes the plurality of pre-lithiated areas and the remaining non-pre-lithiated areas, wherein the plurality of pre-lithiated areas are spaced apart from each other with the non-pre-lithiated areas therebetween so that the plurality of pre-lithiated areas form a predetermined pattern. The pre-lithiation method may be called a pre-lithiation having a patterned shape or a pre-lithiation pattern.

Also, generally, unlike the claimed invention, in the pre-lithiation having the patterned shape or the pre-lithiation pattern as described above, each of the plurality of pre-lithiated areas may have a surface area equal or corresponding to that of a negative electrode unit 100 to be used in the secondary battery to be manufactured (see FIG. 11). In accordance with the claimed invention, however, each of the plurality of pre-lithiated areas has a surface area significantly less than that of the negative electrode unit 100 to be produced (see FIGS. 2 to 15).

In the formation of the negative electrode 120 by applying the negative electrode active material to the second collector 110, a difference in thickness of the areas may occur. Also, when the pre-lithiation is performed on the entire surface or a large area of the negative electrode 120, current charging may be concentrated into a relatively thick portion, and thus, the pre-lithiation may actively or intensively occur to cause a volume expansion due to the formation of a large amount lithium oxide at the above-described position. Thus, a different in thickness of the area on which the pre-lithiation actively or intensively occurs and the area on which the pre-lithiation does not actively or intensively occur is relatively large. Contact failures between the negative electrode 120 and the separator 300 may occur due to the deviation in thickness when the negative electrode 120 and the second collector 110 or the negative electrode 120 and the separator 300 are laminated, and thus, this may have a bad influence on the performance of the secondary battery.

Thus, in an embodiment of the present invention, when the negative electrode 120 is pre-lithiated, the negative electrode 120 may be pre-lithiated so that the plurality of pre-lithiated areas are formed to be discontinuous, thereby preventing or suppressing the phenomenon in which the pre-lithiation relatively largely or intensively occurs at a portion or a specific area of the negative electrode 120. Thus, the thickness deviation for each position or area of the pre-lithiated negative electrode may be reduced. In an embodiment, when the negative electrode is pre-lithiated so that the plurality of pre-lithiated areas are discontinuous, each of the plurality of pre-lithiated areas may have a surface area of 400 *µ*m² or less to more efficiently reduce the thickness deviation.

In an embodiment of the present invention, the large-area negative electrode 120 may be pre-lithiated in a roll-to-roll method that will be described later to reduce a pre-lithiation time of the negative electrode 120, thereby improving production rates of the negative electrode 120 and the secondary battery including the negative electrode 120.

Hereinafter, a pre-lithiation apparatus and method according to the illustrative example and the embodiment will be described. Here, a structure in which a negative electrode 120 is formed on a second collector 110 by using a negative electrode active material is called a 'negative electrode structure (10)'.

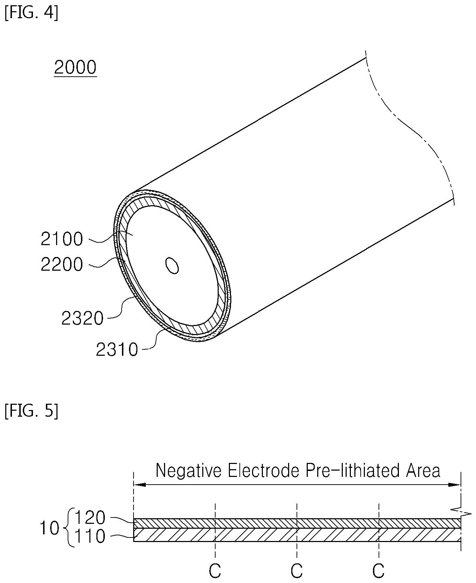

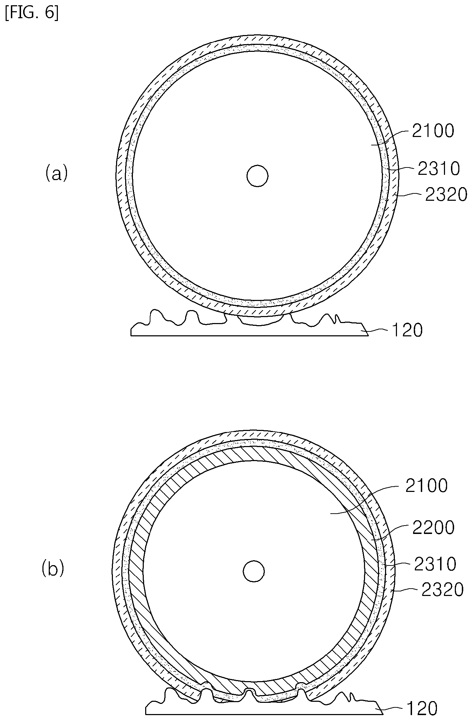

FIG. 3 is a conceptual view of a pre-lithiation apparatus including a lithium roll according to the illustrative example. FIG. 4 is a schematic solid view of the lithium roll according to the illustrative example. FIG. 5 is a view of a negative electrode structure that is pre-lithiated through the lithium roll according to the illustrative example. FIG. 6A is a schematic view illustrating a lithium roll which does not include an elastic member and a state during pre-lithiation using the same, and FIG. 6B is a schematic view illustrating a lithium roll including the elastic member and a state during pre-lithiation using the same.

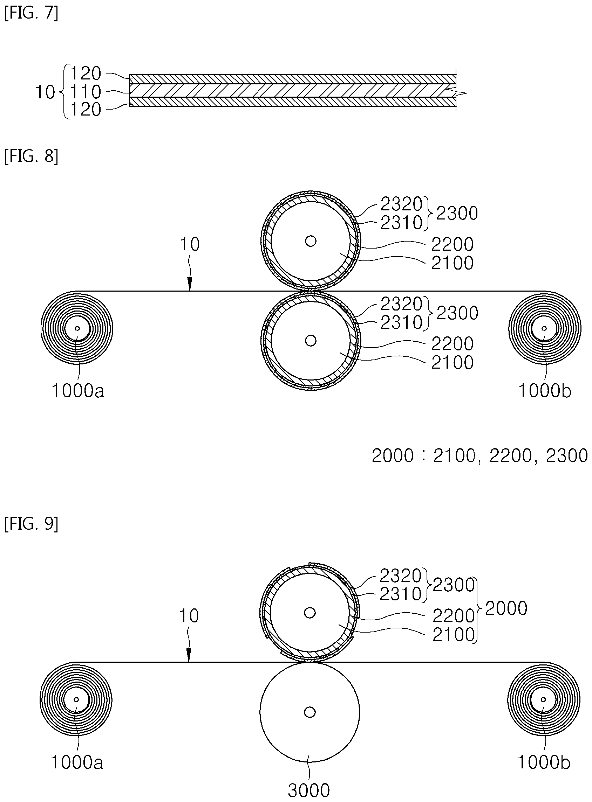

FIG. 7 is a view of a negative electrode structure that is pre-lithiated through a pre-lithiation apparatus according to a modified example of the illustrative example. FIG. 8 is a conceptual view of the pre-lithiation apparatus according to the modified example of the illustrative example.

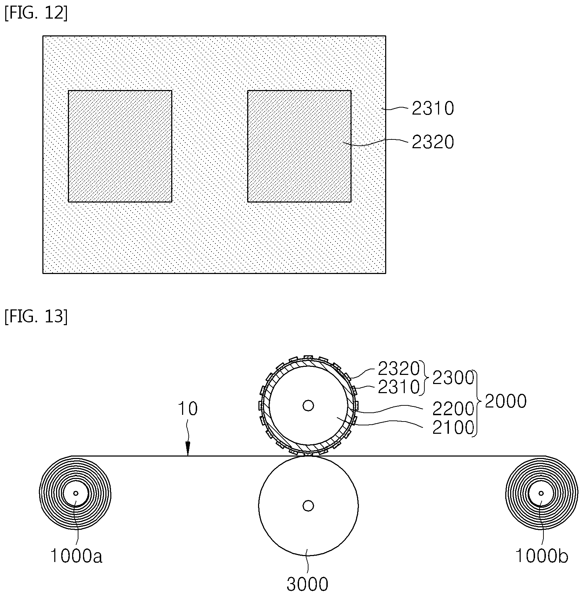

FIG. 9 is a conceptual view of a pre-lithiation apparatus including a lithium roll according to an embodiment of the present invention. FIG. 10 is a schematic solid view of the lithium roll according to the embodiment of the present invention. FIG. 11 is a view of a negative electrode structure that is pre-lithiated through the lithium roll, not forming part of the claimed invention. FIG. 12 is a conceptual top view illustrating a state before a lithium foil is installed on an electric member according to the embodiment of the present invention.

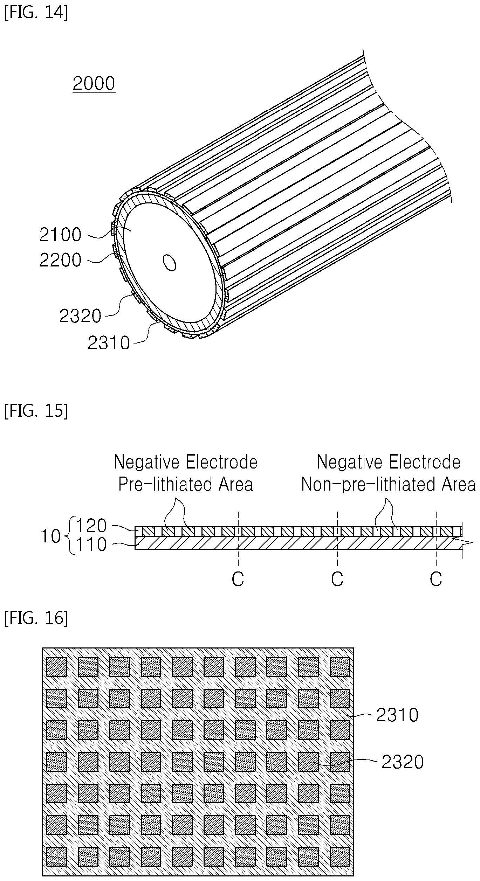

FIG. 13 is a conceptual view of a pre-lithiation apparatus including a lithium roll according to a modified example of the embodiment. FIG. 14 is a schematic solid view of the lithium roll according to the modified example of the embodiment. FIG. 15 is a view of a negative electrode structure that is pre-lithiated through the lithium roll according to the modified example of the embodiment. FIG. 16 is a conceptual top view illustrating a state before a lithium foil is installed on an electric member according to the modified example of the embodiment.

Referring to FIG. 3, a pre-lithiation apparatus according to the illustrative exampleincludes a first roll 1000a around which a negative electrode structure 10 is wound before pre-lithiation, a second roll 1000b disposed to be spaced apart from the first roll 1000a to collect the negative electrode structure 10 on which the pre-lithiation is performed, and a roll (hereinafter, referred to as a lithium roll 2000) disposed between the first roll 1000a and the second roll 1000b and installed to come into contact with one surface of a negative electrode 1 when the negative electrode structure 10 unwound from the first roll 1000a is transferred to the second roll 1000b so that lithium ions are provided to the negative electrode 120, and a support roll 3000 disposed to face the lithium roll 2000 in a direction facing a back surface of the negative electrode structure 10. Also, although not shown, the pre-lithiation apparatus may include a driving unit that rotates the first and second rolls 1000a and 1000b.

The negative electrode structure 10 has a configuration in which a negative electrode 120 containing an electrolyte is formed on a large-area second collector 110. The negative electrode structure 10 is tightened or tensioned by the first roll 1000a and the second roll 1000b for the pre-lithiation. An area before the pre-lithiation is performed is wound around the first roll 1000a, and an area on which the pre-lithiation is performed is wound around the second roll 1000b.

The first roll 1000a may be disposed on one side of the lithium roll 2000 and be a roll for waiting the negative electrode structure 10 before the pre-lithiation is performed. That is, the negative electrode structure 10 having a predetermined length may be wound around the first roll 1000a, and the first roll 1000a may rotate to unwind the negative electrode structure 10.

The second roll 1000b may be disposed on the other side of the lithium roll 2000 and be a roll for collecting the negative electrode structure 10 on which the pre-lithiation is performed. That is, the negative electrode structure 10 via the lithium roll 2000 may be wound around the second roll 1000b through rotation of the second roll 1000b.

The lithium roll 2000 is installed and configured to come into contact with one surface of the negative electrode structure 10 during the pre-lithiation while facing the one surface of the negative electrode structure 10 between the first roll 1000a and the second roll 1000b, i.e., a moving path of the negative electrode structure 10. Also, when the negative electrode structure 10 is transferred from the first roll 1000a to the second roll 1000b, since the lithium roll 200 comes into contact with outer circumferential surfaces of the first and second rolls 1000a and 1000b, the lithium roll 2000 may move together or synchronized with the negative electrode structure 10 to rotate.

As illustrated in FIGS. 3 and 4, the lithium roll 2000 includes a rotation body extending in a direction that crosses or is perpendicular to a moving direction of the negative electrode structure 10, an elastic member 2200 installed to surround an outer circumferential surface of the rotation body 210, and a lithium foil 2000 installed to surround an outer circumferential surface of the elastic member 2200 and providing lithium ions.

The rotation body 2100 has a predetermined diameter and a transverse cross-section having a shape that is easily rotatable, i.e., a circular shape.

The elastic member 2200 has elastic force to be deformable and restorable according to application and release of force from the outside. The elastic member 2200 extends in a direction corresponding to the rotation body 2100 to surround the outer circumferential surface of the rotation body 2100. In other words, the elastic member 2200 is manufactured in a hollow shape, and the rotation body 2100 is inserted into an opening of the elastic member 2200. The elastic member 2200 according to an embodiment is provided as a silicon pad, but is not limited thereto. For example, the elastic member 2200 is made of a material that is capable of being installed to surround the outer circumferential surface of the rotation body while having the elasticity, for example, rubber and has various shapes.

The elastic member 2200 may perform pre-lithiation on an entire area of the one surface of the negative electrode 120 without a gap or void.

That is, when a negative electrode active material layer is formed on a second collector 110, it is difficult to form the negative electrode active material layer having the complete same thickness over the entire area. Thus, a thickness difference of the negative electrode active material layer or the negative electrode 120 may occur according to an area of position thereof. In other words, the negative electrode 120 may be formed to relatively protrude for an area or position thereof.

However, for example, as illustrated in FIG. 6, when the lithium roll 2000 does not include the elastic member 2200, when the negative electrode structure 10 moves to a lower side of the lithium roll 2000, only a portion of a negative electrode area disposed to correspond to the lower side of the lithium roll 2000 may come into contact with the lithium foil 2300, and the remaining portion may not come into contact with the lithium foil 2300. Thus, an area on which the pre-lithiation is not performed may occur. When the pre-lithiation process is continuously performed as described above, the pre-lithiation is not uniformly performed on the large-area negative electrode 120.

However, as illustrated in FIG. 6B, in case in which the lithium roll includes the elastic member 2200, when the negative electrode structure 10 moves to the lower side of the lithium roll 2000, the lithium foil 2300 corresponding to a relatively thick area of the area of the negative electrode 120, which corresponds to the lower side of the lithium roll 2000, and the elastic member 2200 are compressed to be recessed inward. Thus, the entire area of the negative electrode 120 corresponding to the lower side of the lithium roll 2000 may come into contact with the lithium foil 2300, and thus, the pre-lithiation may be uniformly performed on the large-area negative electrode 120.

The lithium foil 2300 extends in a direction corresponding to the rotation body 2100 or the elastic member 2200 to surround the outer circumferential surface of the elastic member 2200. The lithium foil 2300 may be formed by depositing, applying, or coating with a lithium film on one surface of a support 2310 having a flexible thin plate or film shape. In this case, the lithium foil 2300 is mounted on the elastic member 2200 so that the lithium film 2320 is exposed to the outside.

The lithium foil 2300 according to the illustrative example has a structure in which the lithium film 2320 is formed on an entire surface of the support 2310. When the lithium foil 2300 is installed to surround the entire outer circumferential surface of the elastic member 2200, the entire outer circumferential surface of the elastic member 2200 may be surrounded by the lithium film 2320. Also, when the negative electrode 120 is pre-lithiated by using the lithium roll 2000 on which the lithium foil 2300 is formed, the entire one surface of the negative electrode 120 is pre-lithiated as illustrated in FIG. 5.

As illustrated in FIG. 5, in the pre-lithiation on the negative electrode 120 of the negative electrode structure 10, the negative electrode 120 is formed on only one surface of the one surface and a back surface of the second collector 110, and thus, the one surface of the negative electrode 120 is pre-lithiated.

However, this not limited thereto. As described in a modified example of the negative electrode structure 10 according to the illustrative example of FIG. 7, the negative electrode 120 may be formed on the one surface and the back surface of the second collector 110 constituting the negative electrode structure 10, and all the two negative electrodes 120 may be pre-lithiated.

For this, as described in the modified example of FIG. 8, the support roll 300 may be changed into the lithium roll in the pre-lithiation apparatus according to the illustrative example.

Also, according to the abovementioned illustrative example, in the negative electrode 120 of the negative electrode structure 10 extending in one direction, the pre-lithiation is continuously performed from a starting point to an ending portion of the pre-lithiation (see FIG. 5). Also, for this, as illustrated in FIGS. 3 and 4, the lithium roll on which the lithium film 2320 is formed is used on the entire one surface of the support 2310.

However, in accordance with the claimed invention, the pre-lithiation is not continuously performed from the starting point to the ending point of the pre-lithiation of the negative electrode 120, but discontinuously performed.

As shown in FIG. 11, in the pre-lithiation of the negative electrode 120 of the negative electrode structure 10, the pre-lithiation may be discontinuously performed. In other words, the large-area negative electrode 120 on which the pre-lithiation process is ended may include a plurality of pre-lithiated areas, and the pre-lithiated areas may be disposed to be spaced apart form each other with a non-pre-lithiated area therebetween. In other words, the large-area negative electrode structure 10 on which the pre-lithiation process is ended may be patterned to have the plurality of pre-lithiated areas spaced part from each other.

Here, generally, unlike the claimed invention, each of the plurality of pre-lithiated areas may have a surface area having the same as or corresponding to the negative electrode unit 100 to be used in the secondary battery to be manufactured. Thereafter, if the pre-limitation having the patterned structure is ended, when the negative electrode structure is cut along the pre-lithiated areas (see C in FIG. 11), the negative electrode unit 100 according to the illustrative example is provided in plurality as illustrated in FIG. 1.

As described above, to perform the pre-lithiation through the method for patterning the negative electrode structure 10 as shown in FIG. 11, a lithium foil 2300 that is patterned as described in the embodiment of the FIGS. 9, 10, and 12 is prepared. That is, in the lithium roll 2000, the lithium film 2320 is not formed on an entire one surface of the support 2310, but the lithium film 2320 having the surface area similar to or the same as that of the negative electrode unit 100 to be produced is formed in plurality on the support 2310 so that the plurality of lithium films 2320 are spaced apart from each other in one direction.

Here, in accordance with the claimed invention, each of the plurality of lithium films 2320 has a surface area less than that of the negative electrode unit 100 to be produced. This is because lithium ions are diffused when the lithium ions are injected due to a potential difference between the one surface of the negative electrode 120 and the lithium film 2320 of the lithium roll 2000, which come into contact with each other.

According to the lithium roll 2000 as described above, while the negative electrode structure passes between the lithium roll 2000 and the support roll 3000, contact between one surface of the negative electrode 120 and a predetermined area of the lithium film 2320 and non-contact between one surface of the negative electrode 120 and a predetermined area of the lithium film 2320 are alternately repeated several times. Thus, as illustrated in FIG. 11, as the pre-lithiation is discontinuously performed on the large-area negative electrode 120, the negative electrode 120 may be pre-lithiated in the pattern shape. When the pre-lithiation of the negative electrode structure 10 is ended, cutting is performed with respect to the pre-lithiated area (see C in FIG. 11), and thus, the negative electrode unit 100 is provided in plurality as described in the illustrative example.

When the negative electrode structure 10 is pre-lithiated, the pre-lithiation is performed into the pattern structure so that the pre-lithiation is performed by an area used as the negative electrode unit 100 of the secondary battery. Thus, when the secondary battery is actually manufactured, since an area that does not act as the negative electrode 120 is not pre-lithiated, consumption of a lithium material for forming the lithium film 230 on the lithium foil 2300 may be reduced.

In the above description, the pre-lithiation is performed through the patterning method so that the plurality of pre-lithiated areas are spaced apart from each other, and the pre-lithiated areas are patterned to have the area corresponding to or having the same surface area as the negative electrode unit to be produced.

However, according to the present invention, the pre-lithiation is performed in the pattern shape, i.e., the negative electrode 120 of the negative electrode unit 100 is patterned to be divided into the plurality of pre-lithiated areas. That is, the negative electrode 120 has the plurality of pre-lithiated areas and the plurality of non-pre-lithiated areas, and like the negative electrode structure 10 according to the modified example of the embodiment of FIG. 5, each of the plurality of pre-lithiated areas has a surface area that is significantly less than that of the negative electrode unit 100 to be produced, for example, have a surface area of 400*µ*m² or less.

Thus, as illustrated in FIG. 15, when the negative electrode structure 10 on which the pre-lithiation is ended is cut to have the same area as the negative electrode unit to be produced (see C in FIG. 15), the negative electrode 120 of each of the plurality of negative electrode units 100 is formed to have the plurality of pre-lithiated areas, each of which may have a surface of 400 *µ*m² or less.

As described above, the pre-lithiation of the negative electrode structure 10 is performed to form the pattern, current charging may be concentrated into a portion or a specific area of the negative electrode 120 due to a relative thickness difference of the negative electrode 120 during the contact between the lithium roll 2000 and the negative electrode 120 to prevent or reduce a phenomenon in which the pre-lithiation relatively largely or concentratedly occur, and thus, a thickness deviation and performance deterioration due to the volume expansion of the partial area may be prevented.

As illustrated in FIG. 15, to perform the pre-lithiation through the method for patterning the negative electrode structure 14 as described in the embodiment of FIG. 15, the lithium foil 2300 that is patterned as illustrated in FIGS. 13, 14, and 16 is prepared. That is, the plurality of lithium films 2320 are discontinuously formed on one surface of the support 2310. Here, each of the lithium films has a surface area that is significantly less than that of the lithium film 2320 according to the embodiment, and the plurality of lithium films are formed on an area corresponding to the negative electrode unit 100 to be produced on the support 2310. Here, one lithium film may have a surface area of 400 *µ*m² or less.

According to the lithium roll 2000 as described above, while the negative electrode structure passes between the lithium roll 2000 and the support roll 3000, contact between one surface of the negative electrode 120 and a predetermined length of the lithium film 2320 and non-contact between one surface of the negative electrode 120 and a predetermined length of the lithium film 2320 are alternately repeated several times. Thus, as illustrated in FIG. 15, as the pre-lithiation is discontinuously performed on the large-area negative electrode 120, the negative electrode 120 may be pre-lithiated in the pattern shape. When the pre-lithiation of the negative electrode structure 10 is ended, cutting is performed according to the surface area of the negative electrode unit of the secondary battery 100 to be manufactured (see C in FIG. 15), and each of the plurality of negative electrode units 100 that are cut to be divided include a plurality of pre-lithiated areas.

As described above, when the pre-lithiation is performed, current charging may be concentrated into a portion or a specific area of the negative electrode 120 due to a relative thickness difference of the negative electrode 120 to prevent or reduce a phenomenon in which the pre-lithiation relatively largely or concentratedly occur, and thus, performance deterioration due to the volume expansion of the partial area may be prevented.

Hereinafter, a thickness deviation of the negative electrode according to first to ten experimental examples will be described with reference to Table 1.

Table 1 shows a thickness deviation of the negative electrode during continuous pre-lithiation, during discontinuous pre-lithiation, and according to a surface area of one pre-lithiated area during the discontinuous pre-lithiation. Hereinafter, 'one lithiated-area' of the plurality of lithiated areas, which are pre-lithiated, during the discontinuous pre-lithiation is called a 'pattern'.

For the experiments, a negative electrode active material was applied to a collector (i.e., a second collector) made of copper and then was dried and rolled. Here, the negative electrode active material may be a mixture containing graphite and SiO, and a mixing ratio of graphite:SiO based on the weight may be 3:5 (graphite:SiO = 3:5).

After the negative electrode active material is applied to the collector, pre-lithiation was performed on the negative electrode active layer.

Here, in the first to ninth experimental examples, the pre-lithiation was discontinuously performed to form a plurality of pre-lithiated areas and a plurality of remaining non-pre-lithiated areas, and in the tenth experimental examples, the pre-lithiation was continuously performed.

Also, in the first to ninth experimental examples, when the pre-lithiation is discontinuously performed, areas of the patterns were different from each other, and each of the patterns had a square shape. Thereafter, a thickness for each area or position of the pre-lithiated negative electrode was measured to calculate a deviation between a maximum thickness and a minimum thickness.

**[Table 1]**

| | First Exper iment al Examp le (Patt ern Area 25*µ*m²) | Secon d Exper iment al Examp le (Patt ern Area 100*µ*m²) | Third Exper iment al Examp le (Patt ern Area 255*µ*m²) | Fourt h Exper iment al Examp le (Patt ern Area 400*µ*m²) | Fifth Exper iment al Examp le (Patt ern Area 625*µ*m²) | Sixth Exper iment al Examp le (Patt ern Area 900*µ*m²) | Sevent h Experi mental Exampl e (Patte rn Area 1600*µ*m²) | Eighth Experim ental Example (Patter n Area 2500*µ*m²) | Ninth Experim ental Example (Patter n Area 10000*µ*m ²) | Tenth Exper iment al Examp le (No Patte rn) |
|---|---|---|---|---|---|---|---|---|---|---|
| Thick ness Devia tion | 2.3*µ*m | 2.2*µ*m | 2.4*µ*m | 2.3*µ*m | 3.2*µ*m | 5.3*µ*m | 6.4*µ*m | 8.1*µ*m | 9.5*µ*m | 12.7*µ*m |

Referring to Table 1, it is seen that the first to ninth experimental examples in which the pre-lithiation is discontinuously performed has a thickness deviation less than that of the tenth experimental example in which the pre-lithiation is continuously performed. Thus, it is seen that, when the pre-lithiation is discontinuously performed, a phenomenon in which the pre-lithiation excessively occurs at a specific position to expand a volume is prevented.

Also, when compared with the first to ninth experimental examples in which the pre-lithiation is discontinuously performed, if the pattern surface area is less than 400 *µ*m² as described in the first to fourth experimental examples, the thickness deviation is less than 2.5*µ*m, and an increase in thickness deviation due to the increase of the surface area is less. However, as described in the fifth to ninth experimental examples, it is seen that, when the pattern surface area exceeds 400 *µ*m², the thickness deviation exceeds 3*µ*m, an increase in thickness deviation due to the increase of the surface area is larger than that of the first to fourth experimental examples. This is because, when the pattern surface area exceeds 400 *µ*m², a degree of concentration of ion or current charging into a specific position or area during the pre-lithiation is large.

Thus, it is seen that, when the surface area of the pattern is less than 400 *µ*m² during the discontinuous pre-lithiation, the phenomenon in which the ion or current charging is concentrated into the specific position or area of the electrode may be effectively prevented to form a more uniform thickness.

Hereinafter, an operation of the pre-lithiation apparatus according to the illustrative example and the pre-lithiation method using the same will be described with reference to FIGS. 3 to 5 and 6B.

First, a large-area negative electrode structure 10 formed on a negative electrode 120 is prepared on a second collector 110. Also, one end of the negative electrode structure 10 is disposed to correspond to a first roll 1000a, and the other end is disposed to correspond to a second roll 1000b, and the second collector 110 is tensioned between the first roll 1000a and the second roll 1000b. Here, most of the negative electrode structure 10 including one end thereof is wound around the first roll 1000a, and the remaining portion including the other end thereof is wound around the second roll 1000b. Also, a front area of the negative electrode structure 10 including the area or the other end wound around the second roll 1000b may be an area on which the pre-lithiation is not initially performed or a surplus area on which the negative electrode active layer is not formed.

Also, each of the first roll 1000a and the second roll 1000b rotates to allow the negative electrode structure 10 wound around the first roll 1000a to move to a direction in which the lithium roll 2000 and the second roll 1000b are disposed. That is, the negative electrode structure 10 that is unwound from the first roll 1000a may pass between the lithium roll 2000 and the support roll 3000 and then recovered while being wound around the second roll 1000b.

When the negative electrode structure 10 pass between the lithium roll 2000 and he support roll 3000, one surface of the negative electrode structure 10, i.e., one surface of the negative electrode 120 comes into contact with a lithium foil 2300, and a back surface of the negative electrode structure 10 comes into contact with the support roll. Here, since the negative electrode of the negative electrode structure 10 has a predetermined voltage, for example, a voltage of 3 V, and the lithium foil has a voltage of 0 V, lithium ions of the lithium foil are injected into the negative electrode due to a potential difference therebetween to react with oxygen of silicon oxide, thereby progressing pre-lithiation for forming lithium oxide.

Here, since the negative electrode structure 10 comes into contact with the lithium roll 2000 and the support roll 3000 while moving, and a pressure is applied to the lithium roll 2000 and the support roll 3000, the pre-lithiation stably occurs, and a pre-lithiation rate is improved when compared with a case in which the pressure is not applied.

Also, since the lithium roll 2000 according to an embodiment includes an elastic member 2200 between a rotation body and the lithium foil 2300, even though the negative electrode 120 has a somewhat nonuniform thickness, or a predetermined position of the negative electrode 120 protrudes, the pre-lithiation may be performed without a gap or empty. That is, as illustrated in FIG. 6B, the lithium foil corresponding to an area having a relatively thick thickness of the area of the negative electrode 120, which corresponds to a lower side of the lithium roll 2000 and the elastic member 2200 are compressed to be recessed inward. Thus, the entire area of the negative electrode 120 corresponding to the lower side of the lithium roll 2000 may come into contact with the lithium foil 2300, and thus, the pre-lithiation may be uniformly performed on the large-area negative electrode.

As described above, the pre-lithiation is performed on the entire area of the negative electrode, as illustrated in FIG. 1 to 5, according to the shape of the lithium roll 2000 or the lithium foil 2300 according to the illustrative example. Thereafter, when the negative electrode structure 10 is cut into a predetermined area (see C in FIG. 5), a plurality of negative electrode units 100 are provided, and each of the negative electrode units 100 is laminated on a separator 300 and a positive electrode 100 to manufacture a secondary battery.

### INDUSTRIAL APPLICABILITY

According to the pre-lithiation apparatus according to the embodiment of the present invention, the process time for pre-lithiating the negative electrode may be reduced when compared with the related art, and thus, the production rate may be improved. Also, the lithium roll includes the elastic member to uniformly perform the lithiation thoroughly. Also, the negative electrode structure may be pre-lithiated in the patterning manner to reduce the amount of lithium consumed in the lithium roll by reducing the pre-lithiation of the area except for the area used as the negative electrode unit of the battery.

## Claims

1. A pre-lithiation apparatus that pre-lithiates a negative electrode structure (10) having one surface on which a negative electrode (120) is disposed to produce a negative electrode unit (100) of a lithium secondary battery, wherein pre-lithiation is a reaction or action in which a negative electrode active material forming the negative electrode (120), which is made of a material comprising silicon oxide (SiO), is reduced to form lithium oxide, the pre-lithiation apparatus comprising:
a first roll (1000a) rotatable to wind or unwind the negative electrode structure (10) therearound or therefrom before the pre-lithiation is performed;
a second roll (1000b) installed to be spaced apart from the first roll (1000a) and rotatable to wind and collect the negative electrode structure (10), on which the pre-lithiation is performed, therearound; and
a lithium roll (2000) extending perpendicular to a direction in which the negative electrode structure (10) is transferred from the first roll (1000a) to the second roll (1000b) and disposed between the first roll (1000a) and the second roll (1000b) to come into contact with at least one of one surface and a back surface of the negative electrode structure (10) while being transferred from the first roll (1000a) to the second roll (1000b) so that lithium ions are provided to the negative electrode (120),
wherein the lithium roll (2000) comprises:
a lithium foil (2300) on which a lithium film (2320) for pre-lithiating the negative electrode (120) is formed on an outer circumferential surface thereof, and
an elastic member (2200) having elasticity inside the lithium foil (2300),
wherein the lithium roll (2000) comprises a rotation body (2100) that is rotatable as the negative electrode structure (10) is transferred,
the elastic member (2200) is installed to surround an outer circumferential surface of the rotation body (2100), and
the lithium foil (2300) is installed to surround an outer circumferential surface of the elastic member (2200) and provides lithium ions,
wherein the lithium foil (2300) has a structure in which the lithium film (2320) is formed on one surface of a support (2310), and the lithium foil (2300) is mounted on the elastic member so that the lithium film (2320) is exposed to the outside,
wherein the support (2310) extends along the outer circumferential surface of the elastic member (2200) to surround the outer circumferential surface of the elastic member (2200), and
a plurality of lithium films (2320) are discontinuously disposed on one surface of the support (2310) to constitute a pattern,
wherein each of the plurality of lithium films (2320) has a surface area less than that of the negative electrode unit (100) to be produced, and
a plurality of discontinuous lithium films (2320) is disposed on an individual area corresponding to the negative electrode unit (100) on the support (2310).

2. The pre-lithiation apparatus of claim 1, wherein the elastic member (2200) comprises a silicone pad.

3. The pre-lithiation apparatus of claim 1, wherein each of the plurality of discontinuous lithium films (2320) has a surface area of 400 *µ*m² or less.

4. A method of producing a negative electrode unit (100) of a secondary battery, the method comprising:
a negative electrode structure transfer process of transferring a negative electrode structure (10), in which a negative electrode (120) is formed, in one direction so that an electrolyte is provided on a collector (110) formed to extend in one direction, wherein the negative electrode structure (10) has a configuration in which the negative electrode (120) containing the electrolyte is formed on the collector (110), wherein the electrolyte including lithium ions (Li+) is impregnated or provided in a negative electrode active material forming the negative electrode (120);
a negative electrode pre-lithiation process of allowing at least one surface of the negative electrode (120) to come into contact with a lithium film (2320) formed on an outer circumferential surface of a lithium roll (2000) while transferring the negative electrode structure (10) to pre-lithiate the negative electrode (120) of the negative electrode structure (10), wherein pre-lithiation is a reaction or action in which the negative electrode active material forming the negative electrode (120) is reduced to form lithium oxide,; and
a negative electrode unit formation process of cutting the negative electrode structure (10) on which the pre-lithiation of the negative electrode (120) is performed to produce a plurality of negative electrode units (100),
wherein, in the pre-lithiation process, an elastic member (2200) disposed inside the lithium roll (2000) is pressed in a direction of a rotation axis of the lithium roll (2000) according to a thickness of one surface of the negative electrode (120) coming into contact with the lithium film (2320) surrounding an outer circumferential surface of the elastic member (2200) to minimize a gap between the at least one surface of the negative electrode (120) and the lithium film (2320),
wherein the negative electrode (120) of the negative electrode structure (10) is made of a material comprising silicon oxide (SiO),
wherein, in the negative electrode pre-lithiation process, a pre-lithiated area that is patterned so that pre-lithiated areas and non-pre-lithiated areas are alternately repeated is formed on the one surface of the negative electrode (120),
wherein the formation of the patterned pre-lithiated area is performed so that the negative electrode structure (10) transferred in the one direction comes into contact with the lithium roll (2000) on which a plurality of lithium films (2320) that are discontinuously patterned on an outer circumferential surface of the negative electrode structure (10) are formed to form a plurality of discontinuous pre-lithiated areas,
wherein each of the plurality of lithium films (2320) has a surface area less than that of the negative electrode unit (100) to be produced, and
in the negative electrode structure (10), a pattern of the pre-lithiated areas is formed so that pre-lithiated areas and non-pre-lithiated areas are alternately repeated several times within an individual area corresponding to the negative electrode unit (100) to be produced.

5. The method of claim 4, wherein each of the plurality of lithiated regions has a surface area of 400 *µ*m² or less.

6. A negative electrode unit (100) of a secondary battery produced by the method of claim 4, comprising:
a collector (110) having a predetermined area; and
a negative electrode (120) coated with silicon oxide on at least one surface of the collector (110) and comprising an electrolyte,
wherein one surface of the negative electrode (120) is discontinuously pre-lithiated so that lithiated areas and non-pre-lithiated areas of the negative electrode (120) are alternately repeated several times.

7. The negative electrode unit of claim 6, wherein, in the alternately repeated shape of a plurality of times of the lithiated areas and non-pre-lithiated areas, each of the lithiated areas has a surface area of 400 *µ*m² or less.

## Patentansprüche

1. Einrichtung zur Prälithiierung, die eine negative Elektrodenstruktur (10) prälithiiert, die eine Oberfläche aufweist, auf der eine negative Elektrode (120) angeordnet ist, um eine negative Elektrodeneinheit (100) einer Lithiumsekundärbatterie zu erzeugen, wobei die Prälithiierung eine Reaktion oder ein Vorgang ist, bei der/dem ein aktives Material der negativen Elektrode (120), das aus einem Material besteht, das Siliziumoxid (SiO) umfasst, reduziert wird, um Lithiumoxid zu bilden, wobei die Einrichtung zur Prälithiierung Folgendes umfasst:
eine erste Walze (1000a), die drehbar ist, um die negative Elektrodenstruktur (10) vor der Prälithiierung um diese herum aufzuwickeln oder von dieser abzuwickeln;
eine zweite Walze (1000b), die so installiert ist, dass sie von der ersten Walze (1000a) beabstandet ist und drehbar ist, um die negative Elektrodenstruktur (10), auf der die Prälithiierung durchgeführt wird, um diese herum aufzuwickeln und zu sammeln; und
eine Lithiumwalze (2000), die sich senkrecht zu einer Richtung erstreckt, in der die negative Elektrodenstruktur (10) von der ersten Walze (1000a) auf die zweite Walze (1000b) übertragen wird, und die zwischen der ersten Walze (1000a) und der zweiten Walze (1000b) angeordnet wird, um mit mindestens einer Oberfläche und einer Rückseite der negativen Elektrodenstruktur (10) in Kontakt zu kommen, während sie von der ersten Walze (1000a) zu der zweiten Walze (1000b) übertragen wird, so dass Lithiumionen an die negative Elektrode (120) bereitgestellt werden,
wobei die Lithiumwalze (2000) Folgendes umfasst:
eine Lithiumfolie (2300), auf der ein Lithiumfilm (2320) zum Prälithiieren der negativen Elektrode (120) auf einer äußeren Umfangsfläche davon gebildet ist, und
ein elastisches Element (2200), das eine Elastizität innerhalb der Lithiumfolie (2300) aufweist,
wobei die Lithiumwalze (2000) einen Drehkörper (2100) umfasst, der drehbar ist, wenn die negative Elektrodenstruktur (10) übertragen wird,
das elastische Element (2200) so installiert ist, dass es eine äußere Umfangsfläche des Drehkörpers (2100) umgibt, und
die Lithiumfolie (2300) so installiert ist, dass sie eine äußere Umfangsfläche des elastischen Elements (2200) umgibt und Lithiumionen bereitstellt,
wobei die Lithiumfolie (2300) eine Struktur aufweist, bei der der Lithiumfilm (2320) auf einer Oberfläche eines Trägers (2310) gebildet ist, und die Lithiumfolie (2300) auf dem elastischen Element angebracht ist, so dass der Lithiumfilm (2320) nach außen freiliegt,
wobei sich der Träger (2310) entlang der äußeren Umfangsfläche des elastischen Elements (2200) erstreckt, um die äußere Umfangsfläche des elastischen Elements (2200) zu umgeben, und
eine Vielzahl von Lithiumfilmen (2320) diskontinuierlich auf einer Oberfläche des Trägers (2310) angeordnet ist, um ein Muster zu bilden,
wobei jeder der Vielzahl von Lithiumfilmen (2320) einen Oberflächenbereich aufweist, der kleiner ist als der der negativen Elektrodeneinheit (100), die erzeugt werden soll, und
eine Vielzahl von diskontinuierlichen Lithiumfilmen (2320) auf einem einzelnen Bereich angeordnet ist, der der negativen Elektrodeneinheit (100) auf dem Träger (2310) entspricht.

2. Einrichtung zur Prälithiierung nach Anspruch 1, wobei das elastische Element (2200) ein Silikonkissen umfasst.

3. Einrichtung zur Prälithiierung nach Anspruch 1, wobei jeder der Vielzahl von diskontinuierlichen Lithiumfilmen (2320) einen Oberflächenbereich von 400 µm² oder weniger aufweist.

4. Verfahren zum Erzeugen einer negativen Elektrodeneinheit (100) einer Sekundärbatterie, wobei das Verfahren Folgendes umfasst:
Übertragungsprozess für die negative Elektrodenstruktur zum Übertragen einer negativen Elektrodenstruktur (10), bei dem eine negative Elektrode (120) in einer Richtung gebildet wird, so dass ein Elektrolyt auf einem Kollektor (110) bereitgestellt wird, der so gebildet ist, dass er sich in eine Richtung erstreckt, wobei die negative Elektrodenstruktur (10) eine Konfiguration aufweist, bei der die negative Elektrode (120), die den Elektrolyten enthält, auf dem Kollektor (110) gebildet ist, wobei der Elektrolyt, der Lithiumionen (Li+) einschließt, in ein aktives Material einer negativen Elektrode imprägniert oder bereitgestellt ist, das die negative Elektrode (120) bildet;
ein Prälithiierungsprozess der negativen Elektrode darin besteht, dass mindestens eine Oberfläche der negativen Elektrode (120) mit einem Lithiumfilm (2320) in Kontakt kommt, der auf einer äußeren Umfangsfläche einer Lithiumwalze (2000) gebildet wird, während die negative Elektrodenstruktur (10) übertragen wird, um die negative Elektrode (120) der negativen Elektrodenstruktur (10) zu prälithiieren, wobei die Prälithiierung eine Reaktion oder eine Aktion ist, bei der das aktive Material der negativen Elektrode (120), das die negative Elektrode bildet, reduziert wird, um Lithiumoxid zu bilden,; und
Prozess zur Bildung einer negativen Elektrodeneinheit durch Schneiden der negativen Elektrodenstruktur (10), auf der die Prälithiierung der negativen Elektrode (120) durchgeführt wird, um eine Vielzahl von negativen Elektrodeneinheiten (100) zu erzeugen,
wobei, bei dem Prozess der Prälithiierung ein elastisches Element (2200), das innerhalb der Lithiumwalze (2000) angeordnet ist, in einer Richtung einer Drehachse der Lithiumwalze (2000) gemäß einer Dicke einer Oberfläche der negativen Elektrode (120) gedrückt wird, die in Kontakt mit dem Lithiumfilm (2320) kommt, der eine äußere Umfangsfläche des elastischen Elements (2200) umgibt, um einen Spalt zwischen der mindestens einen Oberfläche der negativen Elektrode (120) und dem Lithiumfilm (2320) zu minimieren,
wobei die negative Elektrode (120) der negativen Elektrodenstruktur (10) aus einem Material hergestellt ist, das Siliziumoxid (SiO) umfasst,
wobei bei dem Prälithiierungsprozess der negativen Elektrode ein prälithiierter Bereich, der so strukturiert ist, dass sich prälithiierte Bereiche und nicht prälithiierte Bereiche abwechseln, auf der einen Oberfläche der negativen Elektrode (120) gebildet wird,
wobei die Bildung des gemusterten prälithiierten Bereichs so durchgeführt wird, dass die in die eine Richtung übertragene negative Elektrodenstruktur (10) mit der Lithiumwalze (2000) in Kontakt kommt, auf der eine Vielzahl von Lithiumfilmen (2320), die auf einer äußeren Umfangsfläche der negativen Elektrodenstruktur (10) diskontinuierlich gemustert sind, gebildet werden, um eine Vielzahl von diskontinuierlichen prälithiierten Bereichen zu bilden,
wobei jeder der Vielzahl von Lithiumfilmen (2320) einen Oberflächenbereich aufweist, der kleiner ist als der der negativen Elektrodeneinheit (100), die erzeugt werden soll, und
in der negativen Elektrodenstruktur (10) ein Muster der prälithiierten Bereiche so gebildet ist, dass prälithiierte Bereiche und nicht prälithiierte Bereiche innerhalb eines einzelnen Bereichs, der der zu erzeugenden negativen Elektrodeneinheit (100) entspricht, mehrmals abwechselnd wiederholt werden.

5. Verfahren nach Anspruch 4, wobei jede der Vielzahl von lithiierten Regionen einen Oberflächenbereich von 400 µm² oder weniger aufweist.

6. Negative Elektrodeneinheit (100) einer Sekundärbatterie, die nach dem Verfahren nach Anspruch 4 erzeugt wurde, umfassend:
einen Kollektor (110), der eine vorbestimmte Fläche aufweist; und
eine negative Elektrode (120), die auf mindestens einer Oberfläche des Kollektors (110) mit Siliziumoxid beschichtet ist und einen Elektrolyten umfasst,
wobei eine Oberfläche der negativen Elektrode (120) diskontinuierlich prälithiiert ist, sodass lithiierte Bereiche und nicht prälithiierte Bereiche der negativen Elektrode (120) abwechselnd mehrmals wiederholt werden.

7. Negative Elektrodeneinheit nach Anspruch 6, wobei in der abwechselnd wiederholten Form einer Vielzahl von Malen der lithiierten Bereiche und der nicht prälithiierten Bereiche jeder der lithiierten Bereiche eine Oberfläche von 400 µm² oder weniger aufweist.

## Revendications

1. Appareil de pré-lithiation qui réalise une pré-lithiation d'une structure (10) d'électrode négative ayant une première surface sur laquelle une électrode négative (120) est disposée pour produire une unité (100) d'électrode négative d'une batterie secondaire au lithium, dans lequel la pré-lithiation est une réaction ou une action dans laquelle un matériau actif d'électrode négative formant l'électrode négative (120), qui est constitué d'un matériau comprenant de l'oxyde de silicium (SiO), est réduit pour former de l'oxyde de lithium, l'appareil de pré-lithiation comprenant :
un premier rouleau (1000a) apte à tourner pour enrouler la structure (10) d'électrode négative autour de lui-même, ou pour la dérouler à partir de lui-même, avant que la pré-lithiation ne soit mise en oeuvre ;
un second rouleau (1000b) installé de façon à être espacé du premier rouleau (1000a) et étant apte à tourner pour enrouler et collecter autour de lui-même la structure (10) d'électrode négative, sur laquelle la pré-lithiation est mise en oeuvre ; et
un rouleau de lithium (2000) s'étendant perpendiculairement à une direction dans laquelle la structure (10) d'électrode négative est transférée du premier rouleau (1000a) au second rouleau (1000b) et disposé entre le premier rouleau (1000a) et le second rouleau (1000b) pour entrer en contact avec au moins une parmi une première surface et une surface arrière de la structure (10) d'électrode négative pendant qu'elle est transférée du premier rouleau (1000a) au second rouleau (1000b) de sorte que des ions lithium sont fournis à l'électrode négative (120),
dans lequel le rouleau de lithium (2000) comprend :
une feuille de lithium (2300) sur laquelle un film de lithium (2320) pour la pré-lithiation de l'électrode négative (120) est formé sur une surface circonférentielle externe de celle-ci, et
un organe élastique (2200) ayant une élasticité à l'intérieur de la feuille de lithium (2300),
dans lequel le rouleau de lithium (2000) comprend un corps de rotation (2100) qui est apte à tourner lorsque la structure (10) d'électrode négative est transférée,
l'organe élastique (2200) étant installé de façon à entourer une surface circonférentielle externe du corps de rotation (2100), et
la feuille de lithium (2300) étant installée de façon à entourer une surface circonférentielle externe de l'organe élastique (2200), et fournit des ions lithium,
dans lequel la feuille de lithium (2300) a une structure dans laquelle le film de lithium (2320) est formé sur une première surface d'un support (2310), et la feuille de lithium (2300) est montée sur l'organe élastique de telle sorte que le film de lithium (2320) soit exposé vers l'extérieur,
dans lequel le support (2310) s'étend le long de la surface circonférentielle externe de l'organe élastique (2200) de façon à entourer la surface circonférentielle externe de l'organe élastique (2200), et
une pluralité de films de lithium (2320) étant disposés de manière discontinue sur une première surface du support (2310) pour constituer un motif,
dans lequel chaque film de la pluralité de films de lithium (2320) a une superficie inférieure à celle de l'unité (100) d'électrode négative à produire, et
une pluralité de films de lithium (2320) discontinus est disposée sur une zone individuelle correspondant à l'unité (100) d'électrode négative sur le support (2310).

2. Appareil de pré-lithiation selon la revendication 1, dans lequel l'organe élastique (2200) comprend un tampon de silicone.

3. Appareil de pré-lithiation selon la revendication 1, dans lequel chacun de la pluralité de films de lithium (2320) discontinus a une superficie de 400 µm² ou moins.

4. Procédé de production d'une unité (100) d'électrode négative d'une batterie secondaire, le procédé comprenant :
un processus de transfert de structure d'électrode négative consistant à transférer une structure (10) d'électrode négative, dans laquelle une électrode négative (120) est formée, dans une première direction de sorte qu'un électrolyte soit agencé sur un collecteur (110) formé pour s'étendre dans une première direction, dans lequel la structure (10) d'électrode négative a une configuration dans laquelle l'électrode négative (120) contenant l'électrolyte est formée sur le collecteur (110), dans lequel l'électrolyte, incluant des ions lithium (Li+), est imprégné ou agencé dans un matériau actif d'électrode négative formant l'électrode négative (120) ;
un processus de pré-lithiation d'électrode négative consistant à permettre à au moins une première surface de l'électrode négative (120) d'entrer en contact avec un film de lithium (2320) formé sur une surface circonférentielle externe d'un rouleau de lithium (2000) tout en transférant la structure (10) d'électrode négative pour réaliser une pré-lithiation de l'électrode négative (120) de la structure (10) d'électrode négative, dans lequel la pré-lithiation est une réaction ou une action dans laquelle le matériau actif d'électrode négative formant l'électrode négative (120) est réduit pour former de l'oxyde de lithium ; et
un processus de formation d'unité d'électrode négative consistant à couper la structure (10) d'électrode négative sur laquelle la pré-lithiation de l'électrode négative (120) est mise en œuvre pour produire une pluralité d'unités (100) d'électrode négative,
dans lequel, lors du processus de pré-lithiation, un organe élastique (2200) disposé à l'intérieur du rouleau de lithium (2000) est pressé dans une direction d'un axe de rotation du rouleau de lithium (2000) selon une épaisseur d'une première surface de l'électrode négative (120) entrant en contact avec le film de lithium (2320) entourant une surface circonférentielle externe de l'organe élastique (2200) pour minimiser un écartement entre l'au moins une première surface de l'électrode (120) négative et le film de lithium (2320),
dans lequel l'électrode négative (120) de la structure (10) d'électrode négative est constituée d'un matériau comprenant de l'oxyde de silicium (SiO),
dans lequel, lors du processus de pré-lithiation d'électrode négative, une zone traitée par pré-lithiation, qui a un motif tel que des zones traitées par pré-lithiation et des zones non-traitées par pré-lithiation sont répétées de façon alternée, est formée sur la première surface de l'électrode négative (120),
dans lequel la formation de la zone traitée par pré-lithiation à motif est mise en œuvre de telle sorte que la structure (10) d'électrode négative transférée dans la première direction entre en contact avec le rouleau de lithium (2000) sur lequel une pluralité de films de lithium (2320) qui ont un motif discontinu sur une surface circonférentielle externe de la structure (10) d'électrode négative sont formés pour former une pluralité de zones traitées par pré-lithiation discontinues,
dans lequel chaque film de la pluralité de films de lithium (2320) a une superficie inférieure à celle de l'unité (100) d'électrode négative à produire, et,
dans la structure (10) d'électrode négative, un motif des zones traitées par pré-lithiation étant formé de telle sorte que des zones traitées par pré-lithiation et des zones non-traitées par pré-lithiation sont répétées alternativement plusieurs fois au sein d'une zone individuelle correspondant à l'unité (100) d'électrode négative à produire.

5. Procédé selon la revendication 4, dans lequel chacune de la pluralité de régions traitées par pré-lithiation a une superficie de 400 µm² ou moins.

6. Unité (100) d'électrode négative d'une batterie secondaire produite par le procédé selon la revendication 4, comprenant :
un collecteur (110) ayant une zone prédéterminée ; et
une électrode négative (120) revêtue d'oxyde de silicium sur au moins une première surface du collecteur (110) et comprenant un électrolyte,
dans lequel une première surface de l'électrode négative (120) est traitée par pré-lithiation de manière discontinue de telle sorte que des zones traitées par pré-lithiation et des zones non-traitées par pré-lithiation de l'électrode négative (120) sont répétées de façon alternée plusieurs fois.

7. Unité d'électrode négative selon la revendication 6, dans laquelle, dans la forme alternativement répétée une pluralité de fois constituée des zones traitées par pré-lithiation et des zones non-traitées par pré-lithiation, chacune des zones traitées par pré-lithiation a une superficie de 400 µm² ou moins.
